# EUROPEAN PATENT SPECIFICATION

(11) **EP 1 387 805 B1**
(45) Date of publication and mention of the grant of the patent: **16.01.2008**
(21) Application number: 02736270.6
(22) Date of filing: 13.05.2002
(51) Int. Cl.: B65G 1/08

(54) **RACK FOR STORING PRODUCT CARRIERS**
REGAL ZUM LAGERN VON PRODUKTTRÄGERN
CASIER DE STOCKAGE POUR SUPPORTS DE PRODUITS

(30) Priority: 11.05.2001 NL 1018061
(43) Date of publication of application: 11.02.2004
(73) Proprietor: Fountain Patents B.V. i.o., 2909 LC Capelle a/d IJssel (NL)
(72) Inventor: HOOGLAND, Hendricus, Antonius, 1562 ZN Krommenie (NL)
(74) Representative: Prins, Adrianus Willem
(86) International application number: PCT/NL2002/000306
(87) International publication number: WO 2002/092473

(56) References cited:
- EP-A- 0 145 871
- WO-A-01/07345
- DE-A- 19 729 119

## Description

This invention relates to a rack for storing product carriers such as containers, crates, pallets and the like. Such racks are known per se and are supplied, for instance, as ride-in racks, ride-in pallet racks and the like, for instance by the firm Nedcon, Doetinchem, Netherlands.

In known racks such as ride-in pallet racks, a series of wall elements are placed, which extend parallel to each other, substantially in a vertical sense. On the mutually facing sides of two wall elements placed side by side, series of guide rails are mounted, thereby forming a number of guideways extending above each other. On each guideway, a series of product carriers such as pallets can be placed behind each other, for storing them. These pallets can then be removed from a guideway from the same side as that from which the pallets are placed, the so-called last in, first out (lifo) system, or from the opposite side, according to the first in, first out (fifo) system. These racks, however, have the disadvantage that a product carrier disposed between a first and last product carrier on a guideway cannot be removed unless the product carriers arranged on the side thereof have been removed. This is particularly laborious and moreover often leads to damage and to logistic problems, specifically in that the order in which the product carriers are disposed changes. A further disadvantage of these racks is that often incomplete use is made of the available space for storage of product carriers, specifically when different products, or product carriers, are to be stored in the same storage space. In fact, in that case, different guideways will store different product carriers, at least products, and not all of the guideways will be completely filled all the time.

WO 01/07345 discloses a device for storage and conveyance of bulky holders, in which two rows of containers are carried by carriers onto guide tracks, each at an angle contrary to the angle of the other guide rail. At the respective ends of the tracks two sets of wheels are provided which can be forced against the under side of a carrier for lifting said carrier from a lower end of a first track to such height that it will roll of said rolls onto the higher and of the other track. The rolls therefore have to move in between the guide tracks and have to be lifted individually

The object of the present invention is to provide a rack of the type described in the preamble, in which the above-mentioned disadvantages are avoided, while maintaining the advantages thereof. To that end, a rack according to the invention is characterized by the features according to claim 1.

In a rack according to the present invention, in each case two guideways are provided next to each other, a first and a second guideway, while at least at one end of each pair of guideways a transfer device is provided with which product carriers can be moved from the first guideway to the second guideway or vice versa. In addition, the first and the second guideway preferably each include an angle with the horizontal, in a feed-through direction for the product carriers, which angles of inclination are opposite to each other. Preferably, a first, upper end of a second guideway is situated at the same height as a second, lower end of the first guideway. Naturally, however, other parts of the guideway may be situated at the same height. The transfer devices adjacent the ends are then so designed that lifting means are provided in them, for receiving a product carrier from a lower end of one of the guideways to move it at least to above the higher end of the adjacent guideway.

In an advantageous embodiment, the transfer devices comprise a third guideway for the product carriers, as well as a portion of a first and second guideway of a respective pair. The transfer devices of the first and second guideway are parallel, but opposite to each other; the transport direction of the third guideway extends approximately perpendicularly thereto. A product carrier can then be moved on the first guideway to the lowermost part thereof, situated on the transfer device, preferably under the influence of gravity, whereafter it can be ridden over the third guideway to the highest part of the adjacent guideway, to be moved from there along the respective adjacent guideway in the opposite direction. Thus, the possibility is obtained of moving product carriers substantially under the influence of gravity, as in a carrousel along the first, second and third guideways. Thus, any random product carrier on either of the two guideways in a pair can be taken off, while moreover the available space can be utilized in an optimum manner. In fact, only one position on either of the guideways needs to be empty or be emptied.

It is preferred that the product carriers are carried on the guideways by trolleys, mobile over the guideways. It is also possible, however, to design the guideways as roller tracks or the like.

In a rack according to the invention, transfer devices are preferably energized pneumatically or hydraulically, so that use can be simply made of, for instance, a line system for pneumatics or hydraulics that is already present. Moreover, this is energetically and acoustically advantageous.

In a further advantageous embodiment, an apparatus according to the invention is characterized by the features according to claim 6.

In such an embodiment, a particularly simple, modular structure is obtained.

Preferably, first guide wheels are provided, with which the product carriers are movable over the first and second guideway, while second guide wheels are provided for guiding the product carriers on the third guideway. These first and/or second wheels can be provided on trolleys riding on rails, but can also be fitted on the first and second and/or third guideways. The rotation axes of the first and second wheels then include an angle of 90°, while the treads of the first and second wheels are preferably provided with respect to the treads of the third guideways in such a manner that when the product carriers, at least the trolleys, are carried by the third guideways, they are clear of the first wheels. To that end, for instance, the third guideways can be movable in vertical direction during use.

In a further advantageous embodiment, the transfer devices can be so designed that trolleys, at least product carriers, can also be moved from a transfer device to an adjacent transfer device, so that product carriers can be moved over several pairs of first and second guide rails.

The invention further relates to a method for forming racks for product carriers, characterized by the features according to claim 14.

In such a method, wall elements, for instance of a type known per se, are simply arranged next to each other, whereafter guideways are formed on opposite sides of a wall element to be regarded as central wall element. The guideways are fitted at an inclination, so that product carriers can move along them to a lower end, substantially under the influence of gravity. With such a method, in a particularly simple manner, a rack can be obtained, in which the available space can be utilized in an optimum manner, while displacement of product carriers requires relatively little energy. It is then preferred that adjacent ends of first and second guideways are coupled with each other with the aid of transfer devices, in such a manner that a product carrier can be brought from one guideway to the adjacent guideway. Thus, a carrousel-like storage unit can be obtained.

The invention further relates to a method for adapting conventional racks, characterized by the features according to claim 18.

The invention further relates to a set of fastening elements for fastening guide rails, characterized by the features according to claim 19.

With the aid of such fastening elements, a rack known per se can be reliably adapted in a simple and fast manner, for the practice of a method according to the present invention. Then, further, substantially use can be made of elements known per se, such as guide rails, roller tracks, wall elements and the like.

In the further subclaims, further advantageous embodiments of a rack and method according to the invention are described. To clarify the invention, exemplary embodiments of an apparatus and method will be described with reference to the drawing. In the drawing:
Fig. 1 schematically shows, in top plan view, a rack according to the invention along the line 1-1 in Fig. 2, without trolleys;
Fig. 2 schematically shows, in side elevation, a portion of a rack according to the invention;
Fig. 3 schematically shows a rack according to the invention in sectional front view along the line III-III in Fig. 1;
Figs. 4A-C schematically show, in front view, a transfer device according to the invention in three positions;
Fig. 5 schematically shows a portion of a rack according to the invention in an alternative embodiment;
Fig. 6 schematically shows a detail for a suspension of a guide rail for a rack according to the invention, with two different suspension brackets;
Fig. 7 shows an alternative embodiment of an apparatus according to the invention; and
Fig. 8 shows a further alternative embodiment of an apparatus according to the invention.

In this description, the same or corresponding parts have the same or corresponding reference numerals. In these drawings, for simplicity, the racks are represented as being relatively empty. It will be clear from the description, however, that a particularly high degree of occupation can be obtained.

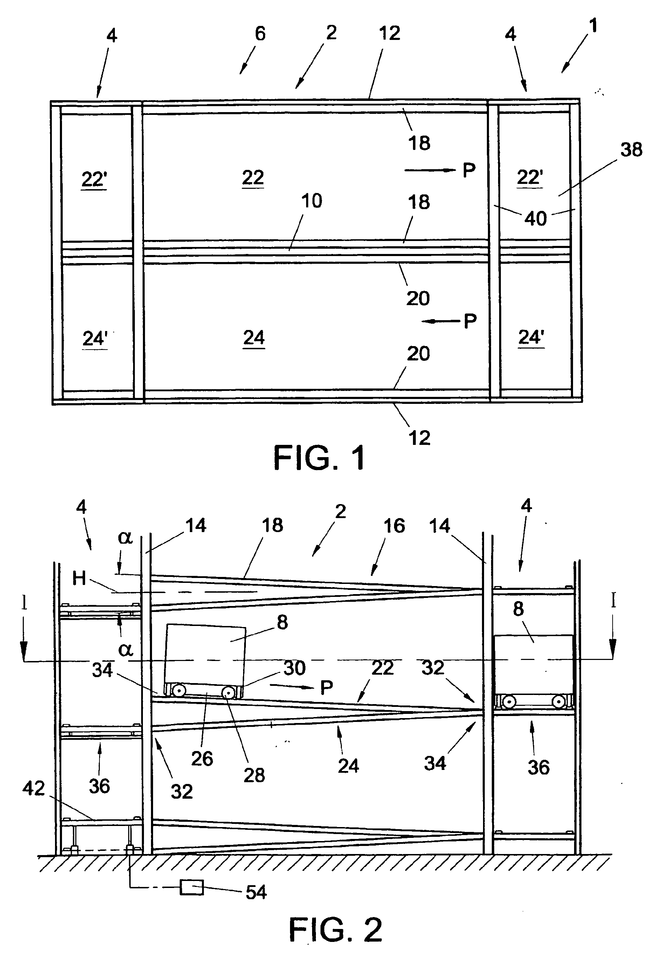

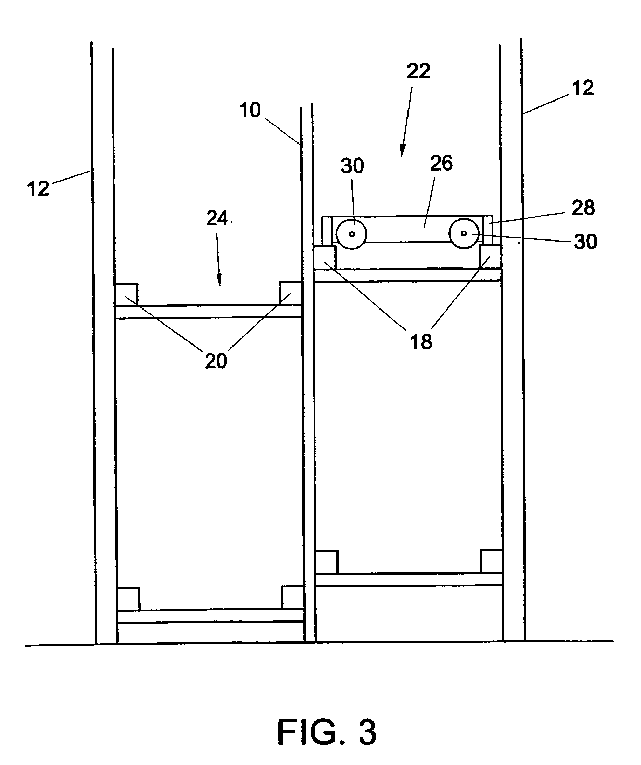

Figs. 1-3 show, in three elevations, a portion of a rack 1 according to the invention, comprising a central part 2 and two end parts 4. The central part 2 and the two end parts 4 jointly form a unit 6. From a series of units 6, which will be further described hereinafter, a rack for a large number of product carriers 8, of which two are shown in Fig. 2, can be formed.

The central part 2 comprises an intermediate wall 10 and a sidewall 12 on opposite sides thereof. Units 6 arranged next to each other can share a sidewall 12, but the units 6 can also be of self-supporting design, that is, each unit has two sidewalls 12, while sidewalls can be shoved against each other. For simplification, the drawing shows, of the sidewall 12, only two vertically extending posts 14, against which the end parts are mounted. In practice, the wall elements can be of wholly or partly open design, for instance as known and supplied by the firm Nedcon, mentioned above, or in any other suitable manner.

Each central part 2 comprises a number of levels 16, each comprising a pair of first guide rails 18 and second guide rails 20. The first guide rails 18 extend parallel to each other on a first side of the intermediate wall 10; the second pair of guide rails 20 extend on the opposite side of the intermediate wall 10. The first pair of guide rails 18 includes an angle of inclination α with the horizontal H; the second pair of guide rails 20 includes the same angle of inclination with the horizontal, but opposite thereto. For clarity, the magnitude of the angles of inclination is exaggerated in the drawing. This angle of inclination is in the order of magnitude of a few degrees, for instance 2 to 6°, more particularly about 4°, and can be simply chosen on the basis of, for instance, the product carriers 8 and allowable speeds and forces. The guide rails 18, 20 together form a first guideway 22 and a second guideway 24, respectively, on which product carriers 8 can be carried with the aid of trolleys 26, of which in Fig. 2 only two are shown. These trolleys are arranged on the first guide rails 18 and second guide rails 20, respectively, with the aid of first wheels 28 mounted on the trolleys, which wheels have a rotation axis extending at right angles to the transport direction P of the first guideway 22 and second guideway 24, respectively. In addition, the trolley 26 is provided, adjacent two opposite ends, with second wheels 30, with rotation axes extending at right angles to the rotation axes of the first wheels 28, for reasons to be mentioned hereinafter. It will be clear that when the trolleys are not braked, for instance with the aid of brake means fitted on the trolleys and/or on the guide rails, the trolleys will move on the first wheels 28, resting on the first guide rails 18 and second guide rails 20, respectively, to a lower, second end 32 of the first guideway 22 and second guideway, respectively.

In the embodiment shown in Fig. 2, the second end 32 of the first guideway 22 is situated approximately at the same height as the upper, second end 34 of the second guideway 24. Each of the guideways 22, 24 can be filled completely with trolleys 26 with product carriers 8 thereon.

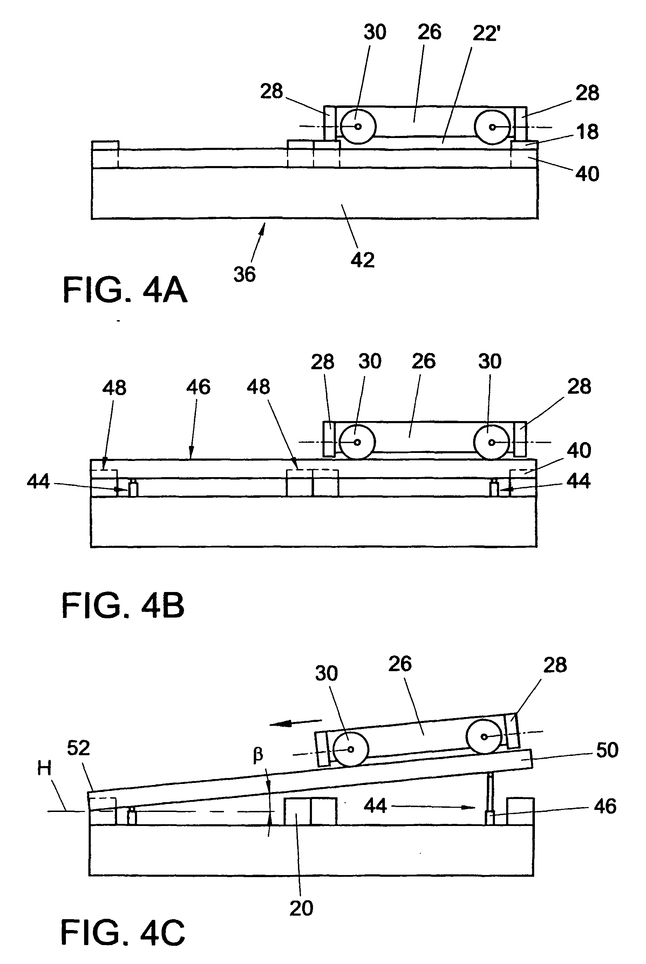

Each end part 4 comprises, adjacent each of the levels 16, a transfer device 36, with which the trolleys 26, at least the product carriers 8, can be brought from the first guideway 22 onto the second guideway 24, or from the second guideway 24 onto the first guideway 22. To that end, each transfer device 36 comprises lifting means (which will be described in more detail hereinafter), as well as a portion 22' of the first guideway 22, a portion 24' of the second guideway 24, and a third guideway 38, formed by two third guide rails 40 extending approximately at right angles to the first and second guideway 22, 24. On these third guide rails 40, the trolleys 26 can be carried by the second wheels 30, with the first wheels 28 located, for instance, between them. The parts 22', 24' and the third guide rails 40 are carried by a suitable frame 42. The operation of the transfer device 36 will be further elucidated with reference to Figs. 4A-4C.

In Fig. 4A, there is shown, in front view, a transfer device 36, in a first, lowered position. A trolley 26 is carried with the aid of the first wheels 28 on the first guide rails 18 of the portion 22' of the first guideway 22. The second wheels 30 are clear of the first guide rails 18 and of the third guide rails 40. Under the influence of gravity, the trolley 26 has simply ridden along the first guideway 22 in the direction P into this position, above the frame 42. Within the frame 42, lifting means 44 are arranged, schematically represented in Figs. 2 and 4 as piston-cylinder assemblies 46. These can be operated, for instance, pneumatically, hydraulically or electrically. However, any other suitable lifting means known per se can be used. From the first position shown in Fig. 4A, the third guide rails 40 can be moved approximately vertically upwards, to a second position as shown in Fig. 4B. In this position, the trolley 26 is carried on the second wheels 30, by the third guide rails 40, the first wheels 28 being clear of the respective guide rails 18, 40. The tread 46 of the third guide rails 40 has been brought above the tread 48 of the first and second guide rails 18, 20.

From the position shown in Fig. 4B, a first end 50, located on the right in Fig. 4C, of the third guide rails can be moved further up with the aid of the lifting means 44, such that the third guide rails 40 include an angle β with the horizontal H, whose magnitude has again been exaggerated in the drawing for clarity. As a result of gravity, the trolley 26 will move on the wheels 30 from the higher, first end 50 in the direction of the opposite, lower, second end 52 of the third guideway 38, so far that the first wheels 28 extend above the second guide rails 20, at least the portion 24' of the second guideway 24. Next, the third guide rails 40 are brought back into a horizontal position, as shown in Fig. 4B, and subsequently moved further down to the position as shown in Fig. 4A, where the trolley 26 is again carried by the first wheels 28, but presently on the second guide rails 20. From this position, the trolley 26 with the product carrier 8 can move down along the second guideway 24, to the lower, second end 32 thereof and onto the identical transfer device 36 located on the opposite side. In the embodiment shown in Fig. 2, the transfer device 36 shown on the left-hand side can move up so far that the trolley (not shown) can be moved from the lower end 32 of the second guideway 24 to the higher, first end 34 of the first guideway 22, so that the trolley can move again in the direction of the transfer device 36 shown on the right. In this manner, on each level 16 a series of trolleys 26 can be circulated over the two guideways 22, 24 and the two transfer devices 36, so that, as in a carrousel, a desired trolley 26 with product carrier 8 can be moved onto a transfer device 36, or can be disposed on the respective level 16 via that transfer device 36. Only one position needs to be unoccupied to enable rotation.

In Fig. 2 there is schematically shown a compressed air provision 54, to which the lifting means 44 may be connected for operation of the different transfer devices 36. To that end, use can be made, for instance, of a standard compressed air unit already present in a warehouse. However, a variety of other energization means can be used.

It is preferred that the transfer devices 36, in addition to the movement possibilities mentioned, further offer the possibility that the portions 22' and 24' of the first and second guideway 22, 24, respectively, incline, or can be tilted over a relatively small angle, in the direction of the guideway 22 and 24, respectively, on which a trolley 26 is to be moved from the transfer device 36, so that the trolley 26 can also be ridden off the transfer devices under the influence of gravity. However, to that end, other energization means may be provided, for instance a pneumatically operable arm which pushes the trolleys from the transfer device. Many variations thereon are possible and will be immediately clear to those skilled in the art.

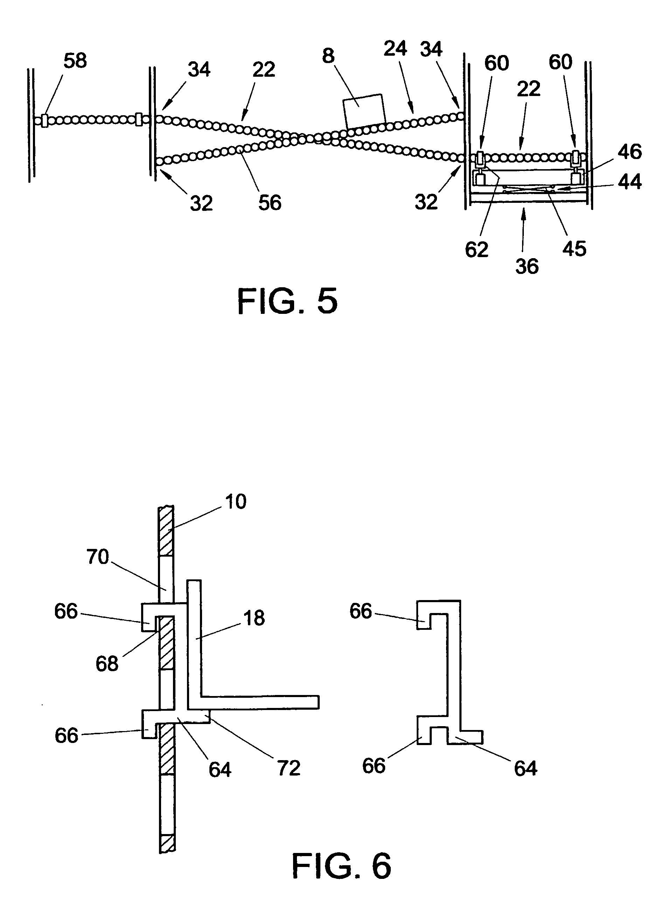

Fig. 5 shows, schematically, an alternative embodiment of a portion of a rack according to the invention, in which the first and second guideways 22, 24 are formed by inclined roller tracks, shown schematically. Product carriers 8 can be placed directly on the rollers 56 in a manner known per se. In this embodiment, the first and second guideway 22, 24 cross each other adjacent the middle. This means that the two upper ends 34, like the two lower ends 32, are situated at the same height. In this embodiment, the transfer devices 36, as shown on the right side in Fig. 5, comprise a portion of the roller track 22 and 24, respectively, as well as two series of wheels 60 which form the third guideway 38, which wheels 60 have a rotation axis which extends approximately horizontally, at right angles to the rotation axes of the rollers 22. The wheels 60 are suspended in channels 62, which are vertically movable by piston-cylinder assemblies 46, such that the upper side of the treads of the wheels 60 can be moved from a first position shown in Fig. 5, in which they extend above the treads of the rollers 22, to a position under the treads of the rollers 22. This means that a product carrier 8 can roll from the first roller track 22 onto the transfer device 36, with the wheels 60 moved down, whereafter the wheels, with the aid of the piston-cylinder assembly 46, can be moved up, so that the product carrier is lifted off the roller track 22. Next, the sections 42 can be tilted to the angle β as shown in Fig. 4C, so that the product carrier rolls to the lower end thereof, whereafter the wheels 60 are moved back down and the product carrier 8 can be moved along the second guideway 24. To that end, the transfer device must be energized, such that with the aid of lifting means 44, for instance, as schematically shown, a linkage mechanism 45, the product carrier 8 is moved up to a point adjacent the upper end 34 of the second guideway 24. In this way, available space can be utilized in a particularly efficient manner.

Fig. 6 schematically shows a suspension of a guide rail 18 in a wall 10, there being provided a suspension element 64 which, on the one hand, can engage behind edges 68 of holes 70 in the wall 10, and, on the other, can carry the rail 18 on a flange 72. The rails 18 can be bonded with the elements 64, for instance, by gluing, welding or the like, or be mounted thereon with other suitable means, such as bolts, clamping means, snap means or the like. The use of hooks 66 in openings 70 is generally known from rack construction. It will also be clear that the suspension means 64 can be designed in any suitable manner to be coupled with wall elements, depending on the selected system for rack construction. Such systems are generally known. Within the invention, use is made of suspension elements 64 which comprise identical fastening means such as the hooks 66 and carrying means such as the flange 72, but in which the vertical position of the fastening means 66 with respect to the carrying means 72 is varied, so that existing wall elements 10, 12 of racks on which normally horizontally extending rails, shelves or the like have been suspended can be used within the invention, while a series of elements 64 can be used having carrying means 72 arranged increasingly lower with respect to the fastening means 66. As a result, an existing rack system can be readily adapted for the practice of the invention.

As use is made of central parts and end parts, a rack according to the invention can be built up relatively simply and rapidly, and, moreover, it can be made of relatively light construction. Central parts 2, for instance, can also be mutually coupled by displacing the transfer device, on one side of two juxtaposed central parts, over one half width of the central parts, such that a transfer device links up with both central parts mentioned. This means that, for instance, a product carrier can be moved from a first guideway of a first central part via a transfer device to a second guideway of said first central part, and can subsequently be transferred, on the opposite side, from said second guideway to the first guideway of the adjacently arranged second central part, and can subsequently be transferred to the second guideway thereof.

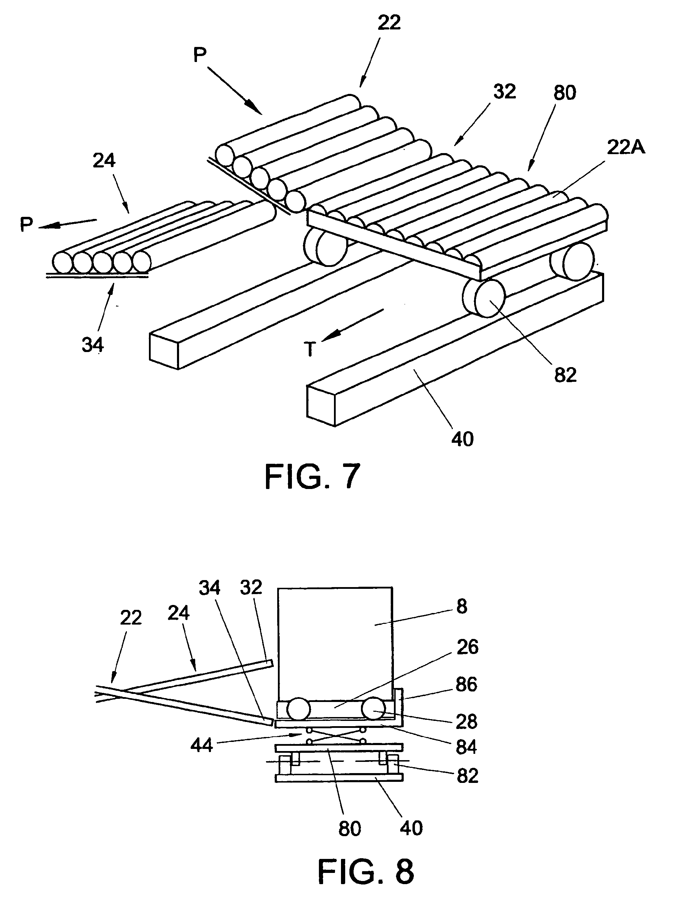

Fig. 7 shows an alternative embodiment of a transfer device according to the invention, illustrating an embodiment utilizing roller tracks. In this embodiment, the lower second end 32 of the first guideway 22 is situated at the same height as the upper end 34 of the second guideway 24. Arranged next to these ends 32, 34 is a transfer trolley 80, provided with an upper surface likewise formed by rollers 22A. The rotation axes of the rollers of the roller tracks 22, 24 are parallel to those of the rollers 22A on the transfer trolley 80. The transfer trolley 80 is carried by wheels 82 on third guide rails 40 which extend at right angles to the transport direction P of the two guideways 22, 24. In this embodiment, a product carrier (not shown) can move down along the first guideway 22 onto the transfer trolley 80, whereafter the transfer trolley 80 is ridden in the direction T to a point next to the upper end 34 of the second guideway 24, whereafter the product carrier can be simply pushed from the transfer trolley 80 onto the second guideway 24. The transfer trolley 80 can be simply energized, for instance manually, electrically, pneumatically, hydraulically, or in any other suitable manner.

Fig. 8 shows a further alternative embodiment of a transfer device according to the invention, in side view. In this embodiment, the product carrier 8 is again carried by a trolley 26, on first wheels 28. The trolley 26 can again move down along a first guideway 22 onto a table 84 with a buffer edge 86. This table 84 is carried with the aid of a lifting device 44, for instance a linkage device, on a transfer trolley 80 which, with the aid of wheels 82, is disposed on a third guideway 40. When the trolley 26 with the product carrier 8 has ridden onto the table 84 from the lower end 34 of the first guideway 22, the transfer trolley 80 is ridden in a direction at right angles to the plane of the drawing, to a point in front of the second guideway 24, whereafter the table 84 with the trolley 26 and product carrier 8 is lifted with the aid of the lifting device 44, to a point next to the upper end 32 of the second guideway 24. Then the trolley 26 with the product carrier 8 can be ridden off the table 84, onto the second guideway 24, optionally by tilting the table 84 slightly.

It will be clear that combinations of the embodiments shown of racks and transfer devices fall within the concept of the invention.

Thus, for instance, a transfer trolley according to Fig. 7 can be provided with lifting means as shown in Fig. 8, or the table 84 can be replaced with a roller track 84A.

The invention is not limited in any way to the exemplary embodiments shown in the description and drawing. Many variations thereon are possible within the scope of the invention outlined by the claims.

Thus, the guideways according to the invention can be designed in any desired manner, and may also be formed, for instance, by wheels, rollers, slideways and the like. One or more of the guideways can also be made of flat design, with trolleys designed to be drivable. To be considered as product carriers are crates, containers, boxes, pallets and the like, this enumeration being non-limitative. Product carriers can be moved into and out of the racks with or without trolley, for instance via an end part 4. Further, a rack according to the invention can also be built up as one whole, that is, with integrated end parts and central part. Guide rails are preferably fitted against opposite sides of an intermediate wall with fastening means, but may also be mounted in a different manner. Optionally, a transfer device can also be arranged between two central parts, allowing product carriers to be brought onto guideways on opposite sides of the transfer device, which yields a still greater freedom and enables a better utilization of the available space. Also, transfer means can be so designed that product carriers can be moved, with their aid, between levels 16. In an advantageous embodiment, in addition, electronic or other means are provided, with which the positions of individual product carriers or groups of product carriers within the rack can be determined, whilst with the aid of a central unit the product carriers can be moved through the racks, for instance to a point of issue.

These and many comparable variations are understood to fall within the scope of the invention outlined by the claims.

## Claims

1. A rack (1) for storing product carriers (8) such as containers, crates, pallets and the like, provided with series of wall elements (10, 12), while between the wall elements means are incorporated, thereby forming at least one series of pairs of first and second guideways (22, 24), which guideways in each pair, at least in top plan view, are approximately parallel to each other, and in side view include an angle α of inclination with a horizontal plane (H), and on each guideway (22, 24) a series of products or product carriers (8) are movable, and at each end of each pair of guideways (22, 24) a transfer device (36) is provided with which a product carrier (8) can be moved from the first guideway (22) to the second guideway (24) in the respective pair, or vice versa, wherein each transfer device (36) defines or comprises a third guideway (38) with a transport direction extending approximately at right angles to the transport direction of the first (22) and second guideways (24) connected therewith, the first (22) and second guideways (24) being inclined in opposite directions, while in at least one of the transfer devices (36) the third guideway (38) is vertically movable, whilst an angle of inclination thereof is also adjustable, **characterized in that** each of the first and second guideway (22, 24) have upper end lower ends (34, 32) which are positioned next to either one of said transfer device (36) such that each of said guideways extends between two transfer devices on either end of said rack, seen in transport direction, such that said transfer device can move vertically free from said first and second guideways (22, 24).

2. A rack according to claim 1, wherein a series of trolleys (26) are provided on the guideways (22, 24, 38) on which product carriers (8) can be carried.

3. A rack according to any one of claims 1-2, wherein each transfer device (36) comprises a third guideway (38) which is carried on or is formed by a frame; wherein the respective adjacent first and second guideways each continue at least partly onto said frame (42), while the frame (42) is carried by adjusting means (44), which are arranged such that the respective third guideway (38) is movable thereby to a position such that a product carrier (8) supplied via a first or second guideway (22, 24) can be moved on the respective transfer device (36) from the part of the respective first or second guideway (22, 24) that extends on the frame (42), while being carried by the third guideway (38), whereafter the angle of inclination of the third guideway is adjustable, such that the product carrier (8) can move along the third guideway (38) to the part of the other guideway that extends on the respective frame, and the frame can be moved such that the product carrier is transferred from the third guideway onto the part of the other guideway of the respective pair that extends on the respective frame, clear of the third guideway.

4. A rack according to any one of the preceding claims, wherein the transfer devices (36) are pneumatically or hydraulically operable.

5. A rack according to any one of the preceding claims, wherein the first and second guideways (22, 24), together with the adjacent wall elements (10, 12), form a first structural part, while the transfer devices (36) are provided in second structural parts, adapted to be coupled with the first structural parts.

6. A rack according to any one of the preceding claims, wherein first guide wheels (28) are provided, with which the product carriers are mobile over the first and second guideway (22, 24), while second guide wheels (30) are provided for guiding the product carriers over, at least along, the third guideways (38).

7. A rack according to claim 6, wherein the first wheels (28) are provided on trolleys.

8. A rack according to claim 7, wherein the second wheels (30) are provided on trolleys, the rotation axes of the first and second wheels mutually including an angle of about 90 degrees.

9. A rack according to claim 8, wherein the treads of the first wheels (28) are spaced from the treads of the second wheels (30), viewed in a direction at right angles to the first, second and third guideways, respectively.

10. A rack according to claim 6 or 7, wherein the second wheels (30) are provided on the transfer devices (36).

11. A rack according to claim 10, wherein the second wheels (30) are carried by adjusting means and form the third guideways.

12. A rack according to any one of the preceding claims, wherein at least a number of transfer devices (36) are disposed and arranged such that product carriers, at least trolleys, can be transferred therewith to an adjacent transfer device, so that product carriers and/or trolleys can be transferred between pairs of first and second guide rails.

13. A method for forming racks for product carriers according to anyone of claims 1-12, wherein wall elements (10, 12) are disposed next to each other, substantially parallel to each other, wherein on facing sides of wall elements standing next to each other guide rails (18, 20), at least guideways (22, 24), are fixed, and product carriers (8) are supported on the guideways, wherein the guideways are fixed at an inclination α against the wall elements, such that the product carriers (8), at least under the influence of gravity, can move in the direction of a lower, first end of the respective guideways and wherein at each end of the guide ways (22, 24) a transfer device (36) is provided comprising a frame (42) on which a guide track is provided having a direction perpendicular to a transport direction of said guide ways (22, 24) which frame (42) is positioned movably in a vertical direction and in inclination within said transfer device (36).

14. A method according to claim 13, wherein the product carriers are carried on trolleys, which trolleys rest on the guide rails.

15. A method according to claim 13 or 14, wherein three wall elements (10, 12) are arranged next to each other, substantially parallel to each other, wherein a guide rails (18, 20) is fixed against the central wall element (10), on opposite sides thereof, said guide rails having an opposite angle of inclination; wherein a guide rail (18, 20) is mounted on the adjacent wall element (12) at a corresponding angle, such that on opposite sides of the central wall (10) element an inclined first and second guideway (22, 24), respectively, are formed, while next to the first and second guideway transfer means (34) are arranged, with which product carriers are transferred from the second end of the first guideway to the first end of the second guideway, the arrangement being such that product carriers can be moved from the first, high end of the first guideway via the first and second guideway to the low, second end of the second guideway, at least largely under the influence of gravity.

16. A method according to claim 15, wherein adjacent the first end of the first guideway (22) and the second end of the second guideway (24), second transfer means (36) are provided, with which the product carriers can be brought from the second guideway onto the first guideway.

17. A method for adapting ride-in racks for storage of product carriers such as containers, pallets, crates or the like, wherein, of a conventional ride-in rack, the guide rails are moved from a horizontal position to an inclined position.

18. A method according to any one of claims 13-17, wherein it is determined for a rack what the maximum loading per product carrier is, and wherein maximum allowable accelerations and decelerations of the product carriers and occurring forces are determined, as well as friction to be expected, whereafter the desired angle of inclination for the first and second guideways is computed.

## Patentansprüche

1. Regal (1) zum Lagern von Produktträgern (8) wie beispielsweise Behältern, Kisten, Paletten und dergleichen, versehen mit einer Reihe von Wandelementen (10, 12), wobei zwischen den Wandelementen eine Einrichtung eingeschlossen ist, wodurch zumindest eine Reihe von Paaren von ersten und zweiten Führungsbahnen (22, 24) gebildet werden, welche Führungsbahnen in jedem Paar zumindest in Draufsicht zueinander ungefähr parallel sind, und in Seitenansicht einen Steigungswinkel a mit einer horizontalen Ebene (H) einschließen, und wobei auf jeder Führungsbahn (22, 24) eine Reihe von Produkten oder Produktträgern (8) beweglich sind und an jedem Ende eines jeden Paares von Führungsbahnen (22, 24) eine Übertragungseinrichtung (36) vorgesehen ist, mit welcher ein Produktträger (8) von einer ersten Führungsbahn (22) auf eine zweite Führungsbahn (24) in dem entsprechenden Paar oder umgekehrt bewegt werden kann, wobei jede Übertragungseinrichtung (36) eine dritte Führungsbahn (38) bildet oder aufweist, mit einer Transportrichtung, die sich ungefähr in rechten Winkeln zu der Transportrichtung der ersten (22) und zweiten Führungsbahn (24) erstreckt, die mit ihr verbunden sind, wobei die ersten (22) und zweiten Führungsbahnen (24) in einander entgegengesetzten Richtungen ansteigen, während in zumindest einer der Überführungseinrichtungen (36) die dritte Führungsbahn (38) vertikal beweglich ist, während ihr Steigungswinkel ebenfalls einstellbar ist,
**dadurch gekennzeichnet,**
**dass** jede der ersten und zweiten Führungsbahnen (22, 24) obere und untere Enden (34, 32) besitzt, die benachbart zu einer der Überführungseinrichtungen (36) so positioniert sind, dass jede der Führungsbahnen sich zwischen zwei Überführungseinrichtungen an jedem Ende des Regals erstreckt, gesehen in der Transportrichtung, sodass die Überführungseinrichtung sich vertikal frei von den ersten und zweiten Führungsbahnen (22, 24) bewegen kann.

2. Regal nach Anspruch 1, in welchem eine Reihe von Transportwagen (26) auf den Führungsbahnen (22, 24, 38) vorgesehen ist, auf welchen die Produktträger (8) befördert werden können.

3. Regal nach einem der Ansprüche 1 bis 2, in welchem jede Überführungseinrichtung (36) eine dritte Führungsbahn (38) aufweist, welche getragen wird auf oder gebildet wird durch einen Rahmen; in welchem die entsprechenden benachbarten ersten und zweiten Führungsbahnen sich jeweils zumindest teilweise bis auf den Rahmen (42) fortsetzen, während der Rahmen (42) durch eine Justiereinrichtung (44) getragen wird, welche so angeordnet ist, dass die entsprechende dritte Führungsbahn (38) **dadurch** zu einer Position so bewegbar ist, dass ein Produktträger (8), der über eine erste oder zweite Führungsbahn (22, 24) zugeführt wird, auf die entsprechende Überführungseinrichtung (36) von dem Teil einer entsprechenden ersten oder zweiten Führungsbahn (22, 24) bewegt werden kann, der sich auf den Rahmen (42) erstreckt, während er von der dritten Führungsbahn (38) getragen wird, woraufhin der Steigungswinkel der dritten Führungsbahn so einstellbar ist, dass der Produktträger (8) längs der dritten Führungsbahn (38) bis zu dem Teil der anderen Führungsbahn bewegt werden kann, welcher sich auf den entsprechenden Rahmen erstreckt, und der Rahmen so bewegt werden kann, dass der Produktträger von der dritten Führungsbahn auf den Teil der anderen Führungsbahn des entsprechenden Paares überführt wird, welcher sich auf den entsprechenden Rahmen frei von der dritten Führungsbahn erstreckt.

4. Regal nach einem der vorstehenden Ansprüche, in welchem die Überführungseinrichtungen (36) pneumatisch oder hydraulisch betätigbar sind.

5. Regal nach einem der vorstehenden Ansprüche, in welchem die ersten und zweiten Führungsbahnen (22, 24) zusammen mit den benachbarten Wandelementen (10, 12) ein erstes strukturelles Teil bilden, während die Führungseinrichtungen (36) in zweiten strukturellen Teilen vorgesehen sind, die so aufgebaut sind, dass sie mit den ersten beiden strukturellen Teilen gekoppelt sind.

6. Regal nach einem der vorstehenden Ansprüche, in welchem erste Führungsräder (28) vorgesehen sind, mit welchen die Produktträger mobil über die ersten und zweiten Führungsbahnen (22, 24) sind, während zweite Führungsräder (30) vorgesehen sind, um die Produktträger über die oder zumindest längs der dritten Führungsbahnen (38) zu führen.

7. Regal nach Anspruch 6, in welchem die ersten Räder (28) an den Transportwagen vorgesehen sind.

8. Regal nach Anspruch 7, in welchem die zweiten Räder (30) an den Transportwagen vorgesehen sind, wobei die Drehachsen der ersten und zweiten Räder miteinander einen Winkel von ungefähr 90° einschließen.

9. Regal nach Anspruch 8, in welchem die Laufflächen der ersten Räder (28) einen Abstand von den Laufflächen der zweiten Räder (30) aufweisen, gesehen in einer Richtung in rechten Winkeln jeweils zu den ersten, zweiten und dritten Führungsbahnen.

10. Regal nach Anspruch 6 oder 7, in welchem die zweiten Räder (30) an den Überführungseinrichtungen (36) vorgesehen sind.

11. Regal nach Anspruch 10, in welchem die zweiten Räder (30) von einer Einstelleinrichtung getragen werden und die dritten Führungsbahnen bilden.

12. Regal nach einem der vorstehenden Ansprüche, in welchem zumindest eine Anzahl von Überführungseinrichtungen (36) so aufgebaut und angeordnet sind, dass die Produktträger, zumindest die Transportwagen, damit auf eine benachbarte Überführungseinrichtung so überführt werden können, dass die Produktträger und/oder die Transportwagen zwischen Paaren von ersten und zweiten Führungsschienen überführt werden können.

13. Verfahren zum Bilden von Regalen für Produktträger nach einem der Ansprüche 1 bis 12, in welchem Wandelemente (10, 12) nebeneinander und im Wesentlichen parallel zueinander angeordnet sind, wobei auf einander gegenüberliegenden Seiten von nebeneinanderstehenden Wandelementen Führungsschienen (18, 20), zumindest Führungsbahnen (22, 24) befestigt sind und Produktträger (8) von den Führungsbahnen getragen werden, wobei die Führungsbahnen mit einer Steigung a an den Wandelementen so befestigt sind, dass die Produktträger (8) sich zumindest unter dem Einfluss der Schwerkraft in eine Richtung eines unteren, ersten Endes der entsprechenden Führungsbahnen bewegen können, und in welchem an jedem Ende der Führungsbahnen (22, 24) eine Überführungseinrichtung (36) vorgesehen ist, die einen Rahmen (42) aufweist, auf welchem ein Führungsgleis vorgesehen ist, das eine Richtung senkrecht zu einer Transportrichtung der Führungsbahnen (22, 24) besitzt, welcher Rahmen (42) in einer vertikalen Richtung beweglich und in einer Steigung innerhalb der Überführungseinrichtung (36) positioniert ist.

14. Verfahren nach Anspruch 13, in welchem die Produktträger auf Transportwagen befördert werden, welche Transportwagen auf den Führungsschienen ruhen.

15. Verfahren nach Anspruch 13 oder 14, in welchem drei Wandelemente (10 oder 12) nebeneinander im Wesentlichen parallel zueinander angeordnet sind, wobei Führungsschienen (18, 20) an dem mittleren Wandelement (10), auf entgegengesetzten Seiten desselben befestigt sind, wobei die Führungsschienen einander entgegengesetzte Steigungswinkel besitzen; wobei eine Führungsschiene (18, 20) auf einem benachbarten Wandelement (12) in einem entsprechenden Winkel so befestigt ist, dass auf einander entgegengesetzten Seiten des mittleren Wandelements (10) jeweils eine ansteigende erste und zweite Führungsbahn (22, 24) ausgebildet ist, während neben den ersten und zweiten Führungsbahnen Überführungseinrichtungen (34) angeordnet sind, mit welchen Produktträger von dem zweiten Ende der ersten Führungsbahn zu dem ersten Ende der zweiten Führungsbahn überführt werden, wobei die Anordnung so ist, dass Produktträger von dem ersten, oberen Ende der ersten Führungsbahn über die erste und zweite Führungsbahn zu dem unteren, zweiten Ende der zweiten Führungsbahn bewegt werden können, zumindest weitgehend unter dem Einfluss der Schwerkraft.

16. Verfahren nach Anspruch 15, in welchem benachbart zum ersten Ende der ersten Führungsbahn (22) und dem zweiten Ende der zweiten Führungsbahn (24) eine zweite Überführungseinrichtung (36) vorgesehen ist, mit welcher die Produktträger von der zweiten Führungsbahn auf die erste Führungsbahn gebracht werden können.

17. Verfahren zum Anpassen von Einstellregalen für das Lagern von Produktträgern wie beispielsweise Behältern, Paletten, Kisten oder dergleichen, in welchem aus einem herkömmlichen Einstellregal die Führungsschienen aus einer horizontalen Position in eine ansteigende Position bewegt werden.

18. Verfahren nach einem der Ansprüche 13 bis 17, in welchem für ein Regal festgelegt wird, welche maximale Belastung für jeden Produktträger besteht und in welchem eine maximal erlaubte Beschleunigung und Verzögerung der Produktträger und der auftretenden Kräfte, wie auch die zu erwartende Reibung festgelegt wird, woraufhin der gewünschte Steigungswinkel für die ersten und zweiten Führungsbahnen berechnet wird.

## Revendications

1. Casier (1) pour stocker des supports de produits (8), tels que des récipients, des caisses, des palettes et analogues, muni d'une série d'éléments de paroi (10, 12), tandis qu'entre les éléments de paroi sont incorporés des moyens, formant ainsi au moins une série de paires de première et deuxième voies de guidage (22, 24), lesquelles voies de guidage de chaque paire, au moins en vue en plan de dessus, sont à peu près parallèles l'une à l'autre, et inscrivent, en vue latérale, un angle α d'inclinaison avec un plan horizontal (H), et sur chaque voie de guidage (22, 24), une série de produits ou de supports de produits (8) peut être déplacée et, à chaque extrémité de chaque paire de voies de guidage (22, 24), il est prévu un dispositif de transfert (36), avec lequel un support de produits (8) peut être déplacé de la première voie de guidage (22) à la deuxième voie de guidage (24) de la paire respective, ou vice versa, dans lequel chaque dispositif de transfert (36) définit ou comprend une troisième voie de guidage (38) avec une direction de transport s'étendant à peu près à angle droit par rapport à la direction de transport des première (22) et deuxième (24) voies de guidage raccordées entre elles, les première (22) et deuxième (24) voies de guidage étant inclinées dans des directions opposées, tandis que, dans au moins un des dispositifs de transfert (36), la troisième voie de guidage (38) peut être déplacée verticalement, alors qu'un angle d'inclinaison de celle-ci peut également être ajusté, **caractérisé en ce que** chacune des première et deuxième voies de guidage (22, 24) a des extrémités supérieure et inférieure (34, 32) qui sont positionnées à côté de l'un quelconque des dispositifs de transfert (36) de sorte que chacune des voies de guidage s'étende entre deux dispositifs de transfert sur l'une quelconque des extrémités dudit casier, vu dans le sens de transport, de sorte que ledit dispositif de transfert puisse se déplacer librement à la verticale depuis les première et deuxième voies de guidage (22, 24).

2. Casier selon la revendication 1, dans lequel il est prévu une série de chariots (26) sur les voies de guidage (22, 24, 38), sur laquelle les supports de produits (8) peuvent être supportés.

3. Casier selon l'une quelconque des revendications 1 à 2, dans lequel chaque dispositif de transfert (36) comprend une troisième voie de guidage (38) qui est supportée ou est formée par un châssis ; dans lequel les première et deuxième voies de guidage adjacentes respectives se poursuivent chacune, au moins en partie, sur ledit châssis (42), tandis que le châssis (42) est transporté par des moyens d'ajustement (44), qui sont disposés de sorte que la troisième voie de guidage respective (38) puisse ainsi être déplacée vers une position telle qu'un support de produits (8) alimenté par la première ou la deuxième voie de guidage (22, 24) puisse être déplacé sur le dispositif de transfert respectif (36) depuis la partie de la première ou de la deuxième voie de guidage respective (22, 24) qui s'étend sur le châssis (42), tout en étant supporté par la troisième voie de guidage (38), après quoi l'angle d'inclinaison de la troisième voie de guidage peut être ajusté, de sorte que le support de produits (8) puisse se déplacer le long de la troisième voie de guidage (38) vers la partie de l'autre voie de guidage qui s'étend sur le châssis respectif et que le châssis puisse être déplacé afin que le support de produits soit transféré de la troisième voie de guidage sur la partie de l'autre voie de guidage de la paire respective qui s'étend sur le châssis respectif, dégagé de la troisième voie de guidage.

4. Casier selon l'une quelconque des revendications précédentes, dans lequel les dispositifs de transfert (36) peuvent être actionnés en mode pneumatique ou hydraulique.

5. Casier selon l'une quelconque des revendications précédentes, dans lequel les première et deuxième voies de guidage (22, 24), conjointement avec les éléments de paroi adjacents (10, 12), forment une première partie structurelle, tandis que les dispositifs de transfert (36) sont ménagées dans des deuxièmes parties structurelles, adaptées pour être couplées avec les premières parties structurelles.

6. Casier selon l'une quelconque des revendications précédentes, dans lequel sont mises en oeuvre des premières roues de guidage (28), avec lesquelles les supports de produits sont mobiles sur le premier et le deuxième élément de guidage (22, 24), tandis que des secondes roues de guidage (30) sont mises en oeuvre pour guider les supports de produits sur les troisièmes voies de guidage 38, au moins le long de celles-ci.

7. Casier selon la revendication 6, dans lequel les premières roues (28) sont placées sur des chariots.

8. Casier selon la revendication 7, dans lequel les secondes roues (30) sont placées sur des chariots, les axes de rotation des premières et secondes roues comprenant mutuellement un angle d'environ 90 degrés.

9. Casier selon la revendication 8, dans lequel les écartements des premières roues (28) et les secondes roues sont espacés des écartements des secondes roues (30), vus dans une direction à angles droits par rapport aux première, deuxième et troisième voies de guidage, respectivement.

10. Casier selon la revendication 6 ou 7, dans lequel les secondes roues (30) sont disposées sur les dispositifs de transfert (36).

11. Casier selon la revendication 10, dans lequel les secondes roues (30) sont supportées par des moyens d'ajustement et forment les troisièmes voies de guidage.

12. Casier selon l'une quelconque des revendications précédentes, dans lequel au moins un certain nombre de dispositifs de transfert (36) sont disposés et ménagés de sorte que des supports de produits, au moins des chariots, puissent être transférés avec un dispositif de transfert adjacent, de sorte que les supports de produits et/ou les chariots puissent être transférés entre des paires de premier et second rails de guidage.

13. Procédé pour former des casiers pour supports de produits selon l'une quelconque des revendications 1 à 12, dans lequel les éléments de paroi (10, 12) sont disposés l'un à côté de l'autre, de manière sensiblement parallèle l'un à l'autre, dans lequel, sur les côtés en regard des éléments de paroi disposés à côté des rails de guidage (18, 20), au moins des voies de guidage (22, 24), sont fixés et des supports de produits (8) sont supportés sur des voies de guidage, dans lequel les voies de guidage sont fixées selon une inclinaison α contre les éléments de paroi, de sorte que les supports de produits (8), au moins sous l'influence de la gravité, puissent se déplacer vers une première extrémité inférieure des voies de guidage respectives, et dans lequel, à chaque extrémité des voies de guidage (22, 24), il est prévu un dispositif de transfert (36), comprenant un châssis (42) sur lequel une piste de guidage est mise en oeuvre avec une direction perpendiculaire à une direction de transport desdites voies de guidage (22, 24), lequel châssis (42) est positionné de manière mobile dans une direction verticale et selon une certaine inclinaison dans ledit dispositif de transfert (36).

14. Procédé selon la revendication 13, dans lequel les supports de produits sont supportés par des chariots, lesquels chariots reposent sur des rails de guidage.

15. Procédé selon la revendication 13 ou 14, dans lequel trois éléments de paroi (10, 12) sont disposés l'un à côté de l'autre, de manière sensiblement parallèle l'un à l'autre, dans lequel des rails de guidage (18, 20) sont fixés contre l'élément de paroi central (10), sur ses côtés opposés, lesdits rails de guidage ayant un angle d'inclinaison opposé ; dans lequel un rail de guidage (18, 20) est monté sur l'élément de paroi adjacent (12) sous un angle correspondant, de sorte que, sur les côtés opposés de l'élément de paroi centrale (10), les première et deuxième voies de guidage (22, 24), respectivement, soient formées, tandis qu'à côté des première et deuxième voies de guidage, des moyens de transfert (34) sont aménagés, avec lesquels des supports de produits sont transférés de la seconde extrémité de la première voie de guidage à la première extrémité de la deuxième voie de guidage, l'aménagement étant tel que les supports de produits puissent être déplacés de la première extrémité élevée de la première voie de guidage, via les première et deuxième voies de guidage, à la seconde extrémité basse de la deuxième voie de guidage, au moins largement sous l'influence de la gravité.

16. Procédé selon la revendication 15, dans lequel, de manière adjacents à la première extrémité de la première voie de guidage (22) et à la seconde extrémité de la voie de guidage (24), des deuxièmes moyens de transfert (36) sont mis en oeuvre, avec lesquels les supports de produits peuvent être amenés de la deuxième voie de guidage à la première voie de guidage.

17. Procédé pour adapter des casiers à déplacement interne pour le stockage de supports de produits, tels que des récipients, des palettes, des caisses ou analogues, dans lequel les rails de guidage d'un casier à déplacement interne classique sont déplacés d'une position horizontale à une position inclinée.

18. Procédé selon l'une quelconque des revendications 13 à 17, dans lequel on détermine pour un casier ce qui est la charge maximale par support de produit, et dans lequel les accélérations et décélérations maximales autorisées des supports de produits et les forces qui en découlent sont déterminées, ainsi que le frottement attendu, après quoi l'angle d'inclinaison souhaité pour les première et deuxième voies de guidage est calculé.
